# EUROPEAN PATENT SPECIFICATION

(11) **EP 0 432 106 B1**
(45) Date of publication and mention of the grant of the patent: **06.04.1994**
(21) Application number: 90830491.8
(22) Date of filing: 30.10.1990
(51) Int. Cl.: B62J 1/26, B62J 1/02

(54) **Cycle saddle provided with a vibration damping arrangement**
Fahrradsattelschwingungsdämpfungseinrichtung
Selle de cycle avec dispositif d'amortissement des vibrations

(30) Priority: 03.11.1989 IT 2204389 U
(43) Date of publication of application: 12.06.1991
(73) Proprietor: SELLE ITALIA S.r.l., I-36028 Rossano Veneto (Treviso) (IT)
(72) Inventor: Bigolin, Giuseppe, c/o Selle Italia S.r.l., I-36028 Rossano Veneto (Vicenza) (IT)
(74) Representative: Cicogna, Franco

(56) References cited:
- FR-A- 946 321
- GB-A- 619 325
- US-A- 4 062 585
- US-A- 4 099 769
- US-A- 4 768 826

## Description

### BACKGROUND OF THE INVENTION

The present invention relates to a saddle in particular for bicycles and motorcycles,provided with vibration damping elements for damping vibrations transmitted to a seated user.

As is known, bicycles and motorcycles are usually provided with a saddle which comprises a saddle frame coated by a wadded leather coating and supporting a plurality of resilient members or springs.

The document GB-A-619 325, which is considered to represent the nearest prior art, discloses a saddle for cycles having substantially the features of the preamble of the main claim.

### SUMMARY OF THE INVENTION

The main object of the present Invention is to provide a saddle which is adapted to damp in a very efficient way vibrations transmitted from an uneven road surface.

Another object of the invention is to provide such a saddle which can be quickly and easily fitted to a bicycle or a motorcycle so as to provide the latter with a great riding comfort.

Another object of the present invention is to provide such a saddle which is very simple construction-wise and can be made at a very competitive cost,while being very reliable in operation.

According to one aspect of the present invention,the above mentioned objects,as well as yet other objects,which will become more apparent hereinafter,are achieved by a saddle for cycles having the features of the characterizing part of the main claim.

### BRIEF DESCRIPTION OF THE DRAWINGS

Further characteristics and advantages of the saddle according to the present Invention will become more apparent from the following detailed description of a preferred embodiment thereof,which is illustrated,by way of an indicative but not limitative example,in the figures of the accompanying drawings,where:
FIGURE 1 is a schematic longitudinal cross-sectional view of the saddle according to the present invention;
   and
FIGURE 2 is a perspective view of the block coupling the saddle frame to the saddle bearing body.

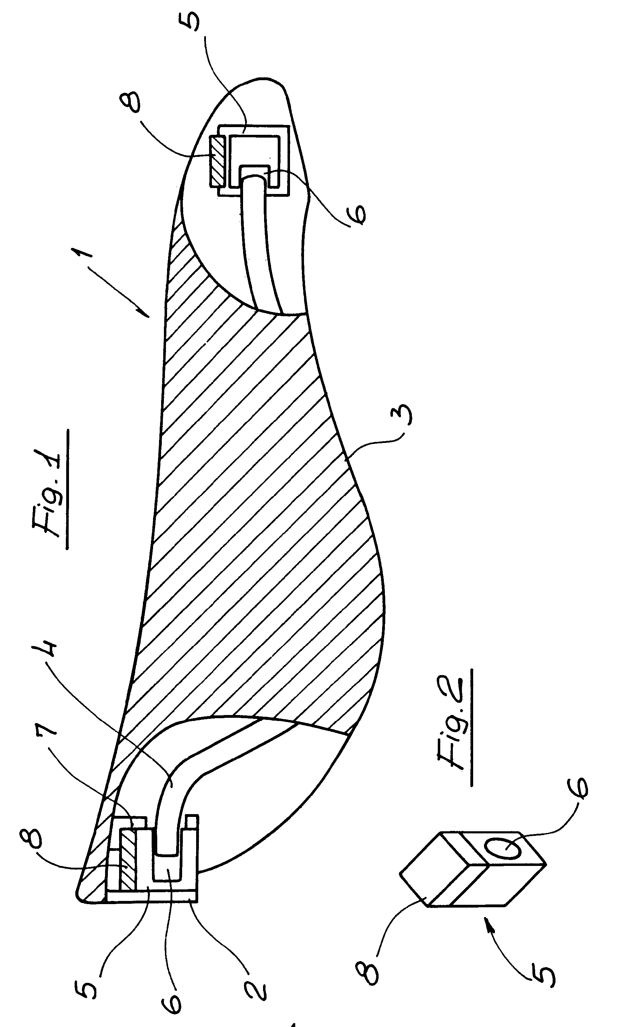

### DESCRIPTION OF THE PREFERRED EMBODIMENT

With reference to the figures of the accompanying drawings,the saddle according to the present invention, indicated at 1,comprises a saddle bearing body 2 which supports a saddle coating 3 made of a leather material or the like.

The saddle bearing body is mounted at the end portions of a supporting frame 4,through corresponding coupling blocks 5,each of said blocks being provided with a counterbore 6 in which a corresponding end portion of the frame can be engaged,said blocks being in turn engaged in corresponding sliding seats 7 rigid with the bearing body 2.

Said blocks,moreover,support on the top portions thereof a respective damping element 8,which can comprise a plastic material or rubber small plate,or a steel spring or a hydraulic pad and the like.

In this connection, it should be pointed out that the travel distance of the mentioned blocks can be restrained within a suitable range by means of suitable end of stroke abutment elements.

As a further feature of the invention,at the rear portion of the saddle either one or two supporting elements can also be provided.

From the above disclosure it should be apparent that the invention fully achieves the intended objects.

While the invention has been disclosed and illustrated with reference to a preferred embodiment thereof it should be apparent that the disclosed embodiment is susceptible to several modifications and variations,all of which will become within the spirit and scope of the appended claims.

## Claims

1. A saddle (1) for cycles comprising a saddle supporting frame (4) and a bearing body (2), wherein said saddle frame (4) comprises frame end portions restrained by restraining blocks (5), said blocks being coupled to said bearing body (2) and each having a top portion thereon there is mounted a resilient vibration damping element (8), characterized in that each said block (5) is provided with a counterbore (6) therein there is engaged an end portion of said frame (4), said blocks (5) engaging in sliding seats (7) rigid with said bearing body (2).

2. A saddle according to Claim 1, wherein said vibration damping element (8) comprises a plastic material plate.

3. A saddle according to Claim 1, wherein said vibration damping element (8) comprises a rubber plate.

4. A saddle according to Claim 1, wherein said vibration damping element (8) comprises a steel spring.

5. A saddle according to Claim 1, wherein said vibration damping element (8) comprises a hydraulic pad.

6. A saddle according to Claim 1, wherein said saddle (1) further comprises end of stroke means for restraining said blocks (5) to a set movement range.

7. A saddle according to Claim 1, wherein at a rear portion of said saddle there are further provided supporting means.

## Patentansprüche

1. Ein Sattel (1) für Räder, umfassend einen Satteltragerahmen (4) und einen Tragekörper (2), wobei dieser Sattelrahmen (4) Rahmenendteile umfaßt, zurückgehalten durch Rückhalteblöcke (5), diese Blöcke mit diesem Tragekörper (2) verbunden sind und jeder ein Oberteil besitzend, auf dem ein elastisches vibrationsdämpfendes Teil (8) montiert ist, dadurch gekennzeichnet, daß jeder dieser Blöcke (5) mit einer Senkung für eine Zylinderschraube (6) geschaffen ist, in die ein Endteil dieses Rahmens (4) verbunden ist, diese Blöcke (5) eingreifend in Gleitaussparungen (7), starr verbunden mit diesem Tragekörper (2).

2. Ein Sattel gemäß Anspruch 1, wobei dieses Vibrationsdämpfungsteil (8) eine Platte aus Plastikmaterial umfaßt.

3. Ein Sattel gemäß Anspruch 1, wobei dieses Vibrationsdämpfungsteil (8) eine Gummiplatte umfaßt.

4. Ein Sattel gemäß Anspruch 1, wobei dieses Vibrationsdämpfungsteil (8) eine Stahlfeder umfaßt.

5. Ein Sattel gemäß Anspruch 1, wobei dieses Vibrationsdämpfungsteil (8) einen hydraulischen Dämpfer umfaßt.

6. Ein Sattel gemäß Anspruch 1, wobei dieser Sattel (1) weiterhin ein Ende einer Stoßvorrichtung zur Zurückhaltung dieser Blöcke (5) innerhalb eines vorgegebenen Bewegungsbereichs umfaßt.

7. Ein Sattel gemäß Anspruch 1, wobei an einem rückwärtigen Teil dieses Sattels weiterhin eine Tragevorrichtung bereitgestellt ist.

## Revendications

1. Selle (1) pour cycles comprenant un châssis de support de selle (4) et un corps de support (2), où ledit châssis de selle (4) comprend des parties de châssis terminales fixées par des blocs de fixation (5), lesdits blocs étant accouplés audit corps de support (2) et ayant chacun une partie supérieure sur laquelle un élément résilient amortisseur des vibrations (8) est monté, caractérisée en ce que chacun desdits blocs (5) est pourvu d'un logement cylindrique (6) dans lequel une partie terminale dudit châssis (4) est enclenchée, lesdits blocs (5) s'enclenchant dans des siéges à glissement (7) rigidement fixés audit corps de support (2).

2. Selle selon la Revendication 1, où ledit élément amortisseur des vibrations (8) comprend une tôle en matière plastique.

3. Selle selon la Revendication 1, où ledit élément amortisseur des vibrations (8) comprend une tôle en caoutchouc.

4. Selle selon la Revendication 1, où ledit élément amortisseur des vibrations (8) comprend un ressort en acier.

5. Selle selon la Revendication 1, où ledit élément amortisseur des vibrations (8) comprend un amortisseur hydraulique.

6. Selle selon la Revendication 1, où ladite selle (1) en plus comprend des limiteurs de course pour serrer lesdits blocs (5) dans un jeu préfixé.

7. Selle selon la Revendication 1, où près d'une partie postérieure de ladite selle des dispositifs de support sont ultérieurement prévus.
